# EUROPEAN PATENT SPECIFICATION

(11) **EP 1 585 645 B1**
(45) Date of publication and mention of the grant of the patent: **30.06.2010**
(21) Application number: 03781240.1
(22) Date of filing: 18.12.2003
(51) Int. Cl.: B60L 9/24, H02J 3/18, H02M 7/00

(54) **AN ARRANGEMENT AND A METHOD FOR PROVIDING ELECTRIC POWER TO A VEHICLE**
ANORDNUNG UND VERFAHREN ZUR VERSORGUNG EINES FAHRZEUGS MIT ELEKTRISCHER ENERGIE
DISPOSITIF ET PROCEDE POUR FOURNIR DE L'ENERGIE ELECTRIQUE A UN VEHICULE

(30) Priority: 20.01.2003 SE 0300116
(43) Date of publication of application: 19.10.2005
(73) Proprietor: Bombardier Transportation GmbH, 13627 Berlin (DE)
(72) Inventor: KARLSSON, Bert, S-724 75 Västerås (SE); BERGMAN, Magnus, S-722 15 Västerås (SE); LARSSON, Per, S-722 43 Västerås (SE)
(74) Representative: Olsson, Jan
(86) International application number: PCT/SE2003/002016
(87) International publication number: WO 2004/065159

(56) References cited:
- SU-A1- 1 737 619
- US-A- 3 659 187
- US-A- 6 075 717
- PATENT ABSTRACTS OF JAPAN vol. 199, no. 602 29 February 1996 & JP 07 257 238 A (MEIDENSHA CORP) 09 October 1995

## Description

### TECHNICAL FIELD OF THE INVENTION AND PRIOR ART

The present invention relates to an arrangement for providing electric power to a vehicle from an AC-supply line through a pantograph of the vehicle in contact with the supply line when the vehicle is moving therealong according to the preamble of the appended claim 1 as well as a method for providing electric power to such a vehicle (See document US-A-6 075 717).

The vehicle may be any vehicle receiving electric power through a line along which it is moving, but it is mostly a question of a railway vehicle, such as a locomotive for different types of trains, including trams.

The supply line normally carries a one-phase alternating voltage of 10-30 kV, but the invention is not restricted thereto.

The converter may be any known converter used for converting an alternating voltage into a direct voltage and conversely with the use of Pulse Width Modulation, and it is in the most simple case a two-level converter, but it may just as well have more levels of the voltage pulses on the alternating voltage side, such as for example three levels in a NPC (Neutral Point) converter.

The word "equipment" is here used for all type of equipment on such a vehicle or in wagons or cars connected thereto driven by electric power: Such equipment may for example include an electric motor for driving the vesicle, for example an asynchronous motor, and lightening, heating devices and so on needing electric power. However, it is pointed out that it is also possible that a part of this equipment receives electric power from another source, such as a battery, which may be charged through the supply line or when the vehicle is braking. In the case of for example an asynchronous motor a further converter, a so called machine converter, is arranged in the electric power flow path downstreams said converter for creating a three-phase alternating voltage used to drive the motor.

"Control members" as used here and in the claims is to be interpreted broadly and comprises all types of means used for the control of electric power consumption on board of the vehicle or wagons connected thereto. Examples of such control members are members actuated by the driver of the vehicle for driving the vehicle (accelerating, keeping the speed, braking ...) and different types of regulators actuated by hand or through sensors for heating the vehicle and/or wagons or cars connected thereto.

The feeding of electric power in such supply lines is carried out with an attempt to keep the power factor in a said vehicle close to 1 for reducing power losses. In a low load operation of the vehicle, i.e. when said power orders correspond to a power delivered to said equipment being very low with respect to the maximum power that may be delivered from the arrangement thereto, the voltage on the opposite side of the transformer with respect to the pantograph will be nearly exactly the same as the voltage on the supply line. This results in a number of problems should the contact between the pantograph and the supply line be defective, which in the practice means that an insulating layer is present between the pantograph and the line. This means that these problems occur when the wether results in a risk of formation of ice on the supply line. In such a case the difference in voltage on the supply line and on the alternating voltage side of the converter, related to a primary side of the transformer, which is very small, will be applied as a driving voltage across the ice layer. This means that there will be no voltage being high enough for driving a current through the ice during a period of time before and after a said zero crossing of the current. Accordingly, the current to the transformer and the converter may be distorted, and an arc may be created between the pantograph and the supply line resulting in an Emk, which in the case of a transformer being connected with a primary winding to the pantograph, will drive a direct current through the primary winding of the transformer, so that the transformer may be saturated resulting in a propagation of oscillations to the direct voltage on the direct voltage side of the converter in such a case. These oscillations may occur at frequencies used for the signal system of the railway infrastructure, so that devices for protecting said signal system may be tripped and switch said arrangement partly or entirely off. Furthermore, said control unit uses a measured value of the voltage on the supply line for the control of the converter and an ice layer on the supply line means interruptions of such a supply line voltage signal, so that the voltage signal obtained through measuring the voltage on the pantograph will instead correspond to a voltage generated by the converter resulting in severe problems to control the converter, so that the driving of the vehicle may be uncomfortable or even fail totally. There is also a risk of tripping other protection devices on board of the vehicle, such as a device protecting the equipment of the vehicle against a short-circuit on the secondary winding side of the tranformer in the case described above of the transformer located between the pantograph and the converter, since the ice layer on the supply line may have the same influence on parameters used by such a protection device as a real such short-circuit, so that the protection device may trip falsely and thereby unnecessarily disturb the operation of the vehicle.

It is pointed out that the power flow through said converter may go in both directions, so that power may flow from the vehicle to the supply line when the vehicle is braking, and the problems mentioned and the invention applies to both cases.

### SUMMARY OF THE INVENTION

The object of the present invention is to provide an arrangement and a method of the type defined in the introduction at least reducing the problems discussed above.

This object is according to the invention obtained by providing such an arrangement in which the control unit is adapted to use a reference current value having a reactive current component, at least when there is a risk of formation of ice on the supply line and said power orders received correspond to a substantially lower power delivered to said equipment than the maximum power that may be delivered from the arrangement thereto, for controlling the converter to cause a reactive current to flow between the supply line and the vehicle.

The addition of such a reactive current component to the reference current value used when controlling the converter results in a difference between the alternating voltage of the supply line and the voltage on the alternating voltage side of the converter, related to a primary side of the transformer, which is important at zero crossing of the alternating current flowing between the supply line and the vehicle during icy conditions. It is pointed out that when the alternating voltage side of the converter is connected to the secondary side of the transformer the ratio of the transformer will of course result in an always existing difference of the voltage on the supply line and on the alternating voltage side of the converter, but a said driving voltage is only obtained when there is a voltage difference when relating the voltage on the alternating voltage side of the converter to the primary side of the transformer. Such a difference is obtained by adding a reactive current component to said reference current value. This voltage difference is then applied as a driving voltage across the insulating ice layer, and when it is sufficiently high the current will break through the insulation layer, so that the pantograph has a continuous contact with the line. Accordingly, the problems discussed above will not even occur. Although it is only necessary to add a reactive current component to the reference current value when there is a risk of formation of ice and at the same time said power orders are low in comparison with a maximum power order, it is pointed out that the invention is not restricted to the case of adding such a reactive current component only then. These are only minimum criteria, and the control unit may very well be adapted to use such a reactive current component always when there is a risk of formation of ice independently of the magnitude of said power orders or always when the power orders received correspond to a substantially lower power delivered to said equipment than the maximum power that may be delivered from the arrangement thereto irrespectively of the existence of any risk of formation of ice on the supply line for making the arrangement very simple. The control of the converter is unchanged with respect to the traditional control except for a reactive power consumption at lower loads and risk of ice formation.

According to a preferred embodiment of the invention the arrangement further comprises means adapted to measure the temperature outside the vehicle and means adapted to compare temperature values so obtained with a temperature threshold value and when a measured temperature value is above said temperature threshold value send a signal to the control unit to use a reference current value without said reactive current component for the control of the converter. Said comparing means is adapted to have a temperature between +2°C and +7°C, preferably between +4°C and +6°C, as said temperature threshold value. It is advantageous to in this way refrain from using a reactive current component in the reference current value for the control of the converter when there is no need of using such a component, so that reactive currents resulting in losses and not desired in the supply line may be avoided when not necessary.

According to another preferred embodiment of the invention the control unit is adapted to use a reference current value having a reactive current component for the control of the converter under the condition that said power orders received correspond to a substantially lower power delivered to said equipment than the maximum power that may be delivered from the arrangement thereto. According to another preferred embodiment of the invention said condition of a low power ordered for the control of the converter means that the power ordered shall be lower than 0.5, advantageously 0.3 and preferably 0.2 times said maximum power. The difference between the voltage of the supply line and on the opposite side of the tranformer will be dependent on the load (the power ordered) so that there will be no need of any addition of a reactive current component to the current reference value when the power ordered is high enough. Thanks to the introduction of this condition the supply line will not be unnecessarily subjected to reactive currents.

According to another preferred embodiment of the invention the control unit is adapted to use a reference current value having a reactive current component with a magnitude increasing the difference of the voltage of the supply line and the voltage on the alternating voltage side of the converter, related to a primary side of the transformer, at zero crossing of the alternating current from the supply line to the vehicle substantially with respect to an absence of this reactive current component, and the control unit is preferably adapted to use a said reactive current component with a magnitude resulting in a said voltage difference exceeding 1 kV at said zero crossing. An ice layer may hold a voltage of about 1 kV/mm, and mostly a voltage difference with a magnitude in the order mentioned will be enough for ensuring that there will be a drastic reduction of "jumps" to only "micro jumps" in the contact between the supply line and the pantograph and thereby in the current from the supply line to the vehicle.

According to another preferred embodiment of the invention the control unit is adapted to use a reference current value having a reactive current component decreasing with an increase of said power ordered. Said voltage difference at zero crossing of the current may still be kept on a sufficiently high level when the power ordered increases, so that no unnecessarily high reactive current is flowing in the supply line.

According to another preferred embodiment of the invention the arrangement comprises a transformer which has a primary winding connected to said pantograph and the converter has an alternating voltage side thereof connected to a secondary winding of the transformer and is adapted to convert the alternating voltage of said secondary winding into a direct voltage on a direct voltage side of the converter and the arrangement comprises means adapted to measure the direct voltage on the direct voltage side of the converter and deliver information thereabout to the control unit, and the control unit is adapted to use a reference current value having a reactive current component when the measured direct voltage has alternating voltage components above a determined level for one or more determined frequencies. It has been found that the quality of the direct voltage on the direct voltage side of the converter is a very good measure of the performance of the converter control and that deficiencies of this direct voltage indicates a degraded contact between the supply line and the pantograph and thereby a need of an addition of a reactive current component to the reference current value used for the control of the converter.

According to another preferred embodiment of the invention the arrangement is adapted to be arranged in each individual vehicle when a plurality of such vehicles are directly or indirectly connected to each other in a train and to operate independently of such arrangements in the other vehicle or vehicles in the train. This results in a very simple and by that cost efficient construction.

The invention also relates to a method according to the appended method claims. The results of carrying out such a method and the preferred features thereof appear without any doubt from the above description of different embodiments of an arrangement according to the invention.

Furthermore, the invention also relates to a computer program and a computer readable medium according to the corresponding appended claims. It is easily understood that the method according to the invention defined in the appended set of method claims is well suited to be carried out through program instructions from a processor that may be influenced by a computer program provided with the program steps in question.

Further advantages and preferred characteristics of the invention appear from the following description and the other dependent claims.

### BRIEF DESCRIPTION OF THE DRAWINGS

With reference to the appended drawings, below follows a specific description of preferred embodiments of the invention cited as example.

In the drawings:
Fig 1 is a very schematic view illustrating the main features of an arrangement according to the invention,
Fig 2 is a simplified view used to explain the control of a converter shown in Fig 1,
Figs 3 and 4 are diagrams illustrating the voltage and the current of the supply line versus time for an arrangement according to Fig 1 when there is no ice on the supply line,
Figs 5 and 6 are views corresponding to Figs 3 and 4, respectively, under icy conditions,
Fig 7 is a diagram showing the voltage of the supply line and the current between the supply line and the vehicle versus time for an arrangement according to Fig 1 under icy conditions and when a reactive current component is added to the reference current value used for the control of the converter,
Fig 8 is a very simplified diagram showing the voltage on the supply line and that on the alternating voltage side of the converter, related to the primary winding of the transformer, versus time when low power is ordered for the control of said converter but with an addition of a reactive current component to said reference current value,
Fig 9 illustrates schematically the magnitude of the reactive current in the supply line versus real power flowing between the supply line and the vehicle when using an arrangement according to the present invention;
Figs 10 and 11 are diagrams illustrating the power factor versus real power for the case of driving the vehicle and braking the vehicles, respectively, when using a control scheme as indicated in Fig 9,
Fig 12 is a diagram illustrating the direct voltage on the direct voltage side of said converter versus frequency under icy conditions according to the prior art, and
Fig 13 is a view corresponding to Fig 12 when adding a reactive current component to said reference current value for the control of the converter during icy conditions according to the present invention.

### DETAILED DESCRIPTION OF PREFERRED EMBODIMENTS OF THE INVENTION

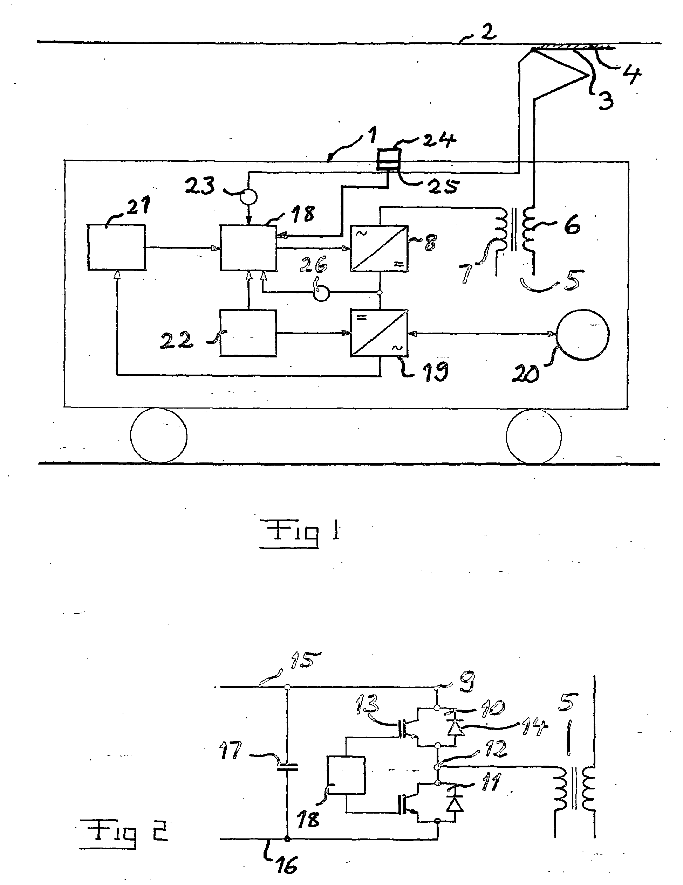

A railway vehicle as well as an arrangement for providing electric power thereto are very schematically illustrated in Fig 1. The vehicle 1 is arranged to move along an AC-supply line 2, which may for example carry a one-phase alternating voltage of 15 kV and 16 2/3 Hz (sweden) and 25 kV and 50 Hz (Denmark). The vehicle is provided with a so-called pantograph 3 in contact with the supply line when the vehicle is moving therealong. However, it is here shown that there exists a distance between the supply line and the pantograph as a consequence of an insulating ice layer 4 covering the supply line. Such a layer could have a thickness of about 1 mm.

The pantograph is connected to a so called main transformer 5 (a number of other transformers may be arranged in the electric system of the vehicle), which is used for obtaining galvanic separation between the pantograph and the electric system of the vehicle and for transforming the voltage on a primary winding 6 thereof to another level on its secondary winding 7 and for making it possible to obtain a control of the power flow between the supply line and the vehicle through controlling a converter 8 connected to said secondary winding.

The converter 8 is adapted to convert the alternating voltage of said secondary winding to a direct voltage on a direct voltage side of the converter. It is illustrated in Fig 2 what such a converter in the most simple form may look like. This converter has only one phase leg 9 with two current valves 10, 11 connected in series. The secondary winding of the transformer constituting the alternating voltage side of the converter is connected to a midpoint 12 between the two current valves. Each current valve is constituted by at least one controllable semiconductor device 13, such as an IGBT (Insulated Gate Bipolar Transistor) or a GTO (Gate Turn-off Thyristor) and a rectifying diode 14 connected in anti-parallel therewith. However, it is pointed out that the symbols used in Fig 2 may stand for a plurality of such controllable semiconductor devices and diodes connected in series, in which case the semiconductor devices of the same current valve will be controlled simultaneously so as to act as one single semiconductor device. The opposite ends of the phase leg 9 are connected to a positive 15 and a negative 16 pole of a direct voltage side of the converter, and the voltage between these two poles is held at a substantially constant level by a capacitor 17 connected therebetween. The arrangement also comprises a control unit 18 adapted to control the semiconductor devices 13 of the current valves to alternatively turn on and turn off for generating a train of pulses according to a Pulse Width Modulation pattern on said midpoint 12.

The control of the control unit takes place in accordance with power and current reference values determined on the basis of power orders received from one or more control members, such as members controlled by the driver of the vehicle. The direction and the magnitude of the power flow through the converter may be regulated by the way of controlling the converter through the control unit. This is well known to persons with skill in the art.

It is shown in Fig 1 how the direct voltage side of the converter 8 may be connected to a so called machine converter 19 converting the direct voltage into a three-phase alternating voltage used to drive an asynchronous motor 20 for driving the vehicle. The machine converter 19 may also be connected to other equipment 21, such as lightening, heating devices and so on, on board of the vehicle, or this equipment may be connected to the direct voltage side of the converter 8 through a separate converter for this equipment. A control member 22 for controlling the machine converter 19 and thereby the motor 20 is schematically indicated. This control member also sends signals to the control unit 18 to be used when deciding the control scheme of the converter 8. The arrangement also comprises means 23 adapted to measure the voltage on the supply line indirectly by measuring the voltage on the pantograph and deliver information thereabout to the control unit 18, which is adapted to base the control of the converter 8 on this measured voltage. The equipment 21 is also adapted to send signals informing about the power need of the equipment to the control unit 18.

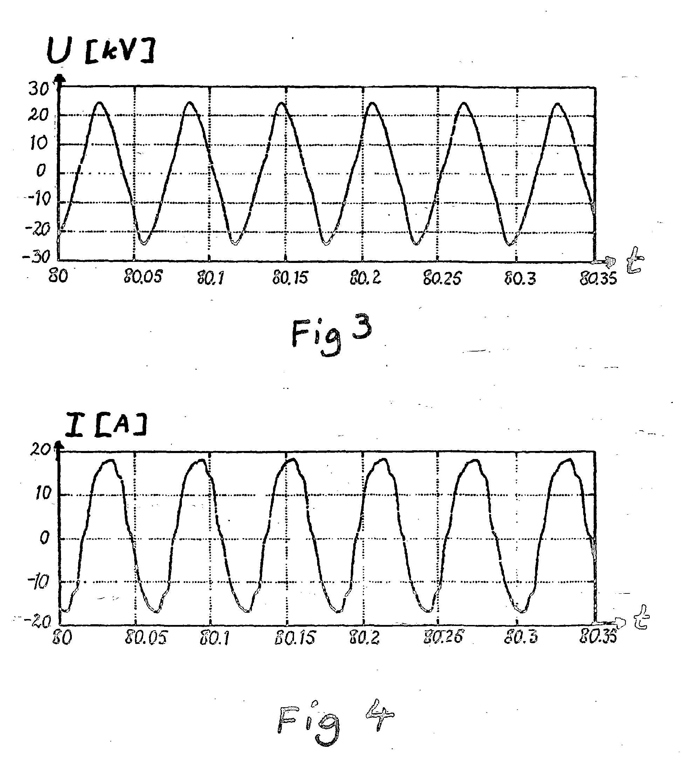

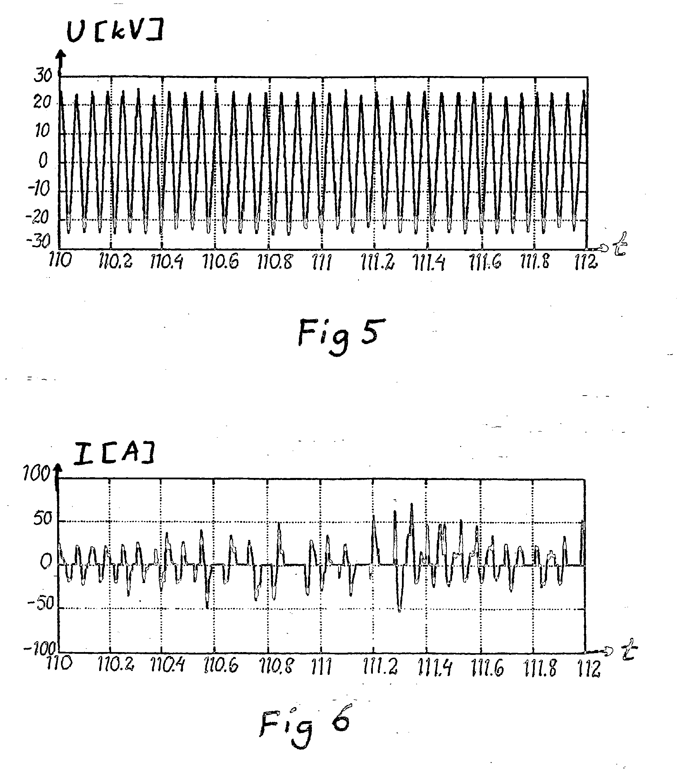

The arrangement described so far is already known. Figs 3 and 4 show the voltage U and the current I, respectively, on the supply line to the vehicle versus time when a vehicle having the arrangement just described moves along a supply line having no ice thereon. Figs 5 and 6 are diagrams corresponding to those shown in Figs 3 and 4 obtained when driving along a supply line having ice thereon. It is shown in Fig 6 how the current is clearly distorted due to the ice. The appearance of such a current depends on a too low driving voltage across the ice layer at zero crossings of the current resulting in the problems discussed in the introduction.

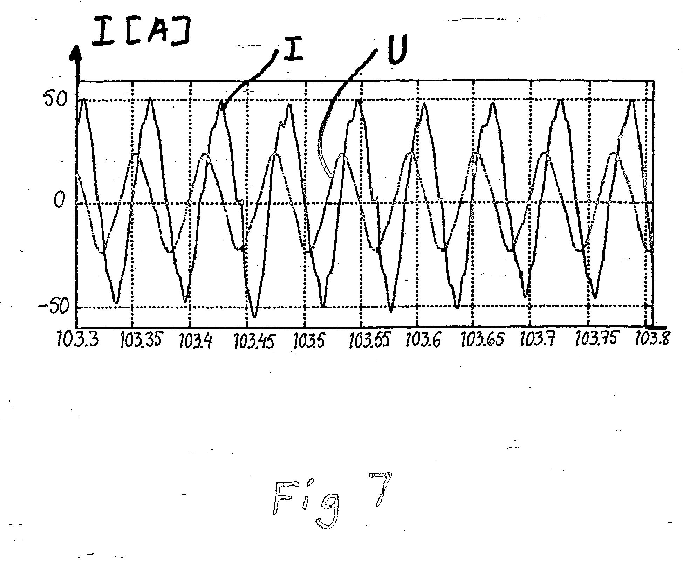

The new features of the arrangement shown in Fig 1 belonging to the present invention and through which these problems are solved will now be described. The control unit 18 in the arrangement according to the present invention is adapted to use a reference current value having a reactive current component, at least when there is a risk of formation of ice on the supply line and said power orders received correspond to a substantially lower power delivered to said equipment than the maximum power that may be delivered from the arrangement thereto, for controlling the converter 8 to cause a reactive current to flow between the supply line 2 and the vehicle 1. Fig 7 corresponds to a combination of Fig 5 and Fig 6, but a reactive current component is here added to said reference current value for the control of the converter according to the present invention. It is shown how the current has now a nearly ideal shape, so that the primary winding of the transformer will not be saturated any longer and oscillations of the direct voltage on the direct voltage side of the converter 8 may be heavily reduced to a level not disturbing the signal system of the vehicle any longer.

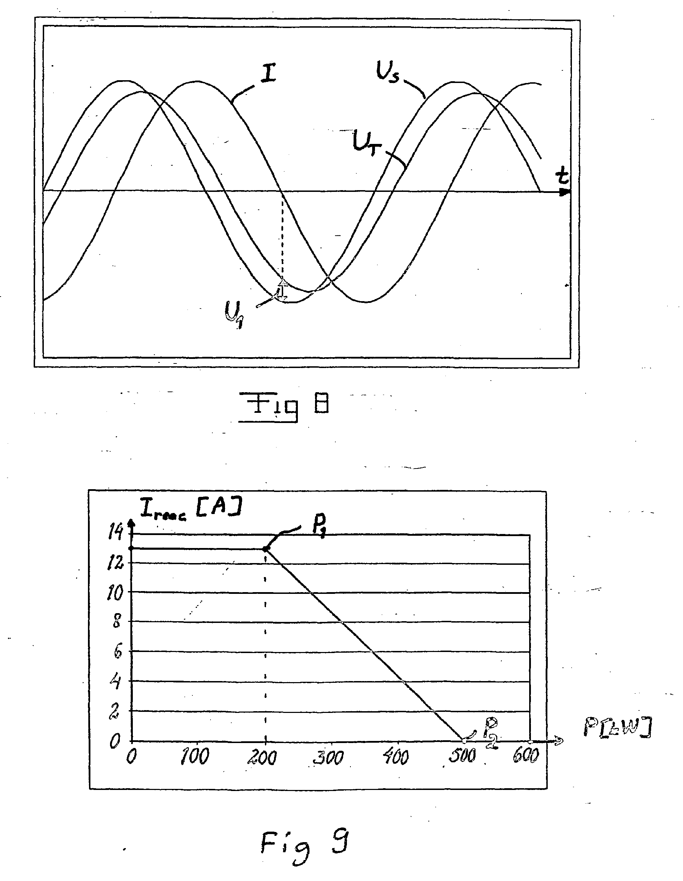

Fig 8 schematically illustrates how the invention displaces the voltage U_{T} on the alternating voltage side of the converter 8 related to the primary side of the transformer with respect to that U_{S} on the supply line for low powers ordered, so that there will be a substantial driving voltage U₁ applied across the ice layer 4 at the zero crossing of the current. I is the current from the supply line. In this case the power factor is rather low with nearly no real power transferred.

The arrangement according to the invention comprises means 24 adapted to measure the temperature outside the vehicle and means 25 adapted to compare temperature values so obtained with a temperature threshold value and when a measured temperature value is above said temperature threshold value send a signal to the control unit 18 to use a reference current value without said reactive current component for the control of the converter avoiding that a reactive current is flowing in the supply line when there is no need therefor. Said temperature threshold value is preferably set to be between +2°C and +7°C, preferably between +4°C and +6°C, for instance +5°C.

The control unit 18 is preferably also adapted to use a reference current value having a reactive current component for the control of the converter 8 under the condition that said power orders received correspond to a substantially lower power delivered to said equipment than the maximum power that may be delivered from the arrangement thereto. This is schematically shown in Fig 9, in which it is shown for a supply line carrying 25 kV of a frequency of 50 Hz how the reactive current component changes with the real power P delivered from the arrangement to the equipment of the vehicle. The reactive current component is substantially constant for power orders being nearly zero to a certain value P₁ as of which the reactive current decreases continuously with increasing power ordered to be zero at a power order P₂. P₁ is here 200 kW and P₂ 500 kW, whereas the maximum power that may be delivered from the arrangement to the vehicle is about 3 MW, i.e. 6 times higher than P₂. Accordingly, a reactive current component is only added to the reference current value for the control of the converter 8 under low load conditions, so that the maximum current through the arrangement will not be influenced by the control scheme according to the invention.

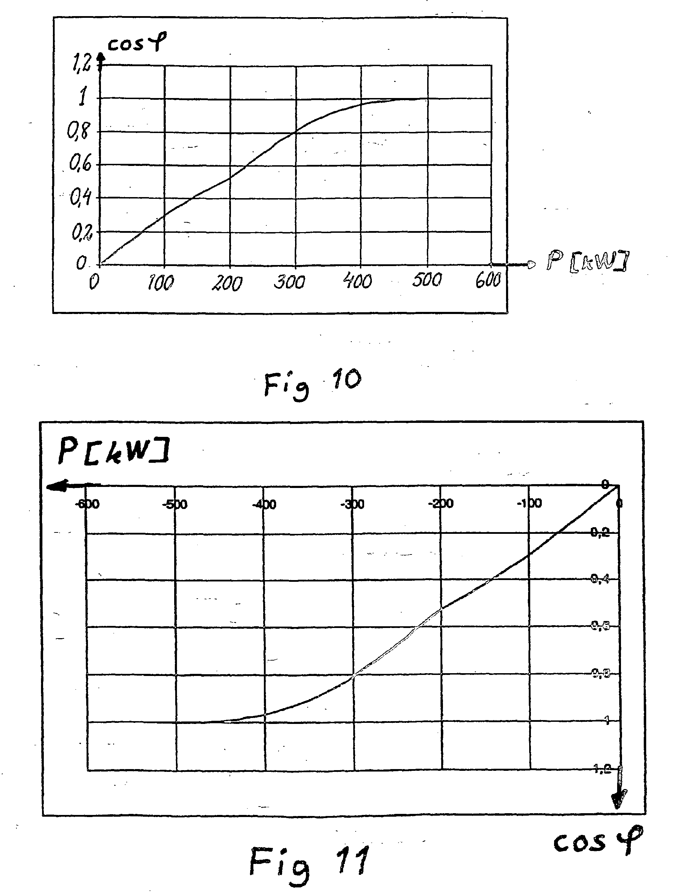

Figs 10 and 11 illustrates the development of the power factor cosϕ, ϕ being the angle between the current from the supply line to the vehicle and the voltage on the supply line, versus the real power P for the control of the converter 8 carried out while adding a reactive current component in accordance with Fig 9 for the case of driving operation (Fig 10) and braking operation (Fig 11) of the motor 20. It is shown how the power factor will be nearly 1 as soon as the power flow through the converter 8 reaches any substantial value.

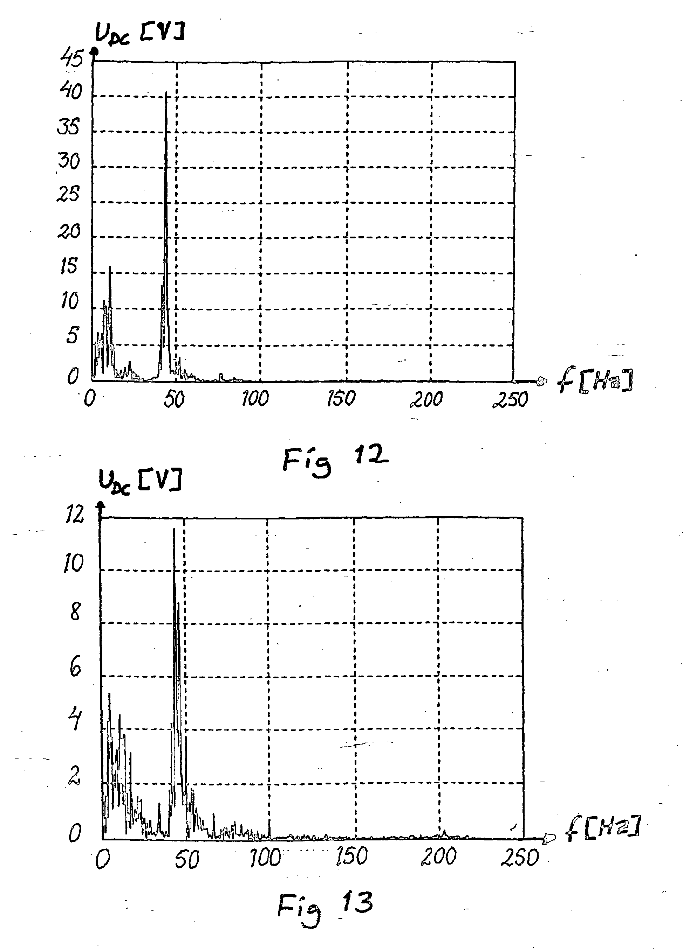

The arrangement according to the present invention also comprises means 26 adapted to measure the direct voltage on the direct voltage side of the converter 8 and deliver information thereabout to the control unit 18, which is adapted to use a reference current value having a reactive current component when the measured direct village has alternating voltage components above a determined level for one or more determined frequencies. Such alternating voltage components will indicate a poor contact between the supply line and the pantograph and may result in tripping of a so-called LIM (Line Interference Monitor) protecting the signal system of the vehicle. Peak values of the direct voltage U_{dc} on the direct voltage side of the converter 8 versus the frequency f are shown in Fig 12 for a normal control of the converter 8 without any addition of a reactive current component to the current reference value during icy conditions. This diagram is for a 15 kV supply line with the frequency of 16 2/3 Hz. There is a peak in the direct voltage around 44 Hz, which is almost exactly the resonance frequency of the direct voltage link 15-17 of the converter. This peak has a value of about 40 V. The corresponding diagram for the case of an addition of a reactive current component of 30 A to the current reference value for controlling the converter 8 is illustrated in Fig 13. It is shown how the oscillations of the direct voltage have decreased considerably, and the peak around 44 Hz is now less than 12 V.

The invention is of course not in any way restricted to the preferred embodiments described above, but many possibilities to modifications thereof will be apparent to a person with ordinary skill in the art without departing from the basic idea of the invention as defined in the appended claims.

The control unit may for example be adapted to use a reference current value having a reactive current component for a predetermined time period, for example at least during 0.5 hour, and preferably during at least 1,5 hours, as of a condition for such a control of the converter is detected to be satisfied. This means that when for example a risk of ice formation on the supply line has once been detected, a reactive current component will be added to the reference current value for the control of the converter during said predetermined time period, possibly under the condition that the power ordered is at the same time at a low level.

Although it has been shown in Fig 1 how the transformer is located in said series connection closer to the pantograph than the converter the invention is not restricted thereto, but the converter may just as well be located between the transformer and the pantograph.

In the case of two or more vehicles being connected directly or indirectly to each other in a train an arrangement according to the present invention may be arranged in each individual such vehicle and to operate independently of such arrangements in other vehicle or vehicles in the train.

It is also possible that the arrangement has more than one converter connected to a said transformer, and the control unit may then be adapted to use a reference current value having a reactive current component shared equally by the converters.

## Claims

1. An arrangement for providing electric power to a vehicle (1) from an AC-supply line (2) through a pantograph (3) of the vehicle in contact with the supply line when the vehicle is moving therealong, said arrangement comprising, connected in series with the pantograph in a path of electric power flow between the supply line and equipment on board of the vehicle, a transformer (5) and a converter (8) adapted to convert alternating voltage into direct voltage and conversely, said series connection delivering a voltage used directly or indirectly for driving said equipment on board of the vehicle, and a control unit (18) adapted to control current valves (10, 11) of said converter to generate voltage pulses on the alternating voltage side thereof according to a Pulse Width Modulation pattern in accordance with power and current reference values determined on the basis of power orders received from one or more control members, ***characterized* in that** the control unit is adapted to use a reference current value having a reactive current component, at least when there is a risk of formation of ice on the supply line and said power orders received correspond to a substantially lower power delivered to said equipment than the maximum power that may be delivered from the arrangement thereto, for controlling the converter to cause a reactive current to flow between the supply line and the vehicle.

2. An arrangement according to claim 1, ***characterized* in that** it further comprises means (24) adapted to measure the temperature outside the vehicle and means (25) adapted to compare temperature values so obtained with a temperature threshold value and when a measured temperature value is above said temperature threshold value send a signal to the control unit to use a reference current value without said reactive current component for the control of the converter.

3. An arrangement according to claim 2, ***characterized* in that** said comparing means (25) is adapted to have a temperature between +2°C and +7°C, preferable between +4°C and +6°C, as said temperature threshold value.

4. An arrangement according to any of the preceding claims, ***characterized* in that** the control unit (18) is adapted to use a reference current value having a reactive current component for the control of the converter (8) under the condition that said power orders received correspond to a substantially lower power delivered to said equipment than the maximum power that may be delivered from the arrangement thereto.

5. An arrangement according to claim 4, ***characterized* in that** said condition of a low power ordered for the control of the converter means that the power ordered shall be lower than 0,5, advantageously 0,3 and preferable 0,2 times said maximum power.

6. An arrangement according to claim 4 or 5, ***characterized* in that** the control unit (18) is adapted to use a reference current value having a reactive current component with a magnitude increasing the difference of the voltage on the supply line and the voltage on the alternating voltage side of the converter, related to a primary side of the transformer, at zero crossing of the alternating current from the supply line to the vehicle substantially with respect to an absence of this reactive current component.

7. An arrangement according to claim 6, ***characterized* in that** the control unit (18) is adapted to use a said reactive current component with a magnitude resulting in a said voltage difference exceeding 1 kV at said zero crossing.

8. An arrangement according to claim 6 or 7, ***characterized* in that** the control unit (18) is adapted to use a said reactive current component with a magnitude resulting in an increase of said voltage difference by a factor of at least 1,5, advantageously of at least 2, and preferably of at least 3.

9. An arrangement according to claim 4 or 5, ***characterized* in that** the control unit (18) is adapted to use a reference current value having a reactive current component being higher than an active current component of said reference current value for the lowest possible power order that may be received by the control unit.

10. An arrangement according to claim 4 and possibly any of the other preceding claims, ***characterized* in that** the control unit (18) is adapted to use a reference current value having a reactive current component of a magnitude resulting in such a difference between the voltage of the supply line and that on the alternating voltage side of the converter, related to a primary side of the transformer, for the lowest possible power order that may be received by the control unit that cos ϕ is lower than 0,9, preferably lower than 0,85, ϕ being the angle between the current from the supply line to the vehicle and the voltage on the supply line.

11. An arrangement according to any of the preceding claims, ***characterized* in that** the control unit (18) is adapted to use a reference current value having a reactive current component decreasing with an increase of said power ordered.

12. An arrangement according to any of the preceding claims, ***characterized* in that** said control unit (18) is adapted to use a reference current value having a reactive current component being constant for power orders below a certain value.

13. An arrangement according to claim 12, ***characterized* in that** the control unit (18) is adapted to use a reference current value having a reactive current component decreasing continuously with increasing power ordered as of said certain value.

14. An arrangement according to any of the preceding claims, ***characterized* in that** it comprises means (23) adapted to measure the voltage on said supply line (2), and that the control unit (18) is adapted to use a reference current value having a reactive current component when jumps of the voltage so measured are detected.

15. An arrangement according to claim 2 and possibly any of the other preceding claims, ***characterized* in that** the control unit is (18) adapted to use a reference current value having a reactive current component for a predetermined time period, for example at least during 0,5 hour, and preferable during at least 1,5 hours, starting with a detection that a condition for such a control of the converter is satisfied.

16. An arrangement according to any of the preceding claims, ***characterized* in that** it is adapted to be arranged in each individual vehicle (1) when a plurality of such vehicles are directly or indirectly connected to each other in a train and to operate independently of such arrangements in the other vehicle or vehicles in the train.

17. An arrangement according to any of the preceding claims, ***characterized* in that** it comprises more than one said converter (8) in said vehicle, and that the control unit (18) is adapted to use a reference current value having a reactive current component shared equally by the converters.

18. An arragement according to any of the preceding claims, ***characterized* in that** said transformer (5) has a primary winding connected to said pantograph and the converter (8) has an alternating voltage side thereof connected to a secondary winding (7) of the transformer and is adapted to convert the alternating voltage of said secondary winding into a direct voltage on a direct voltage side of the converter.

19. An arrangement according to claim 18, ***characterized* in that** it comprises means (26) adapted to measure the direct voltage on the direct voltage side of the converter (8) and deliver information thereabout to the control unit (18), and that the control unit is adapted to use a reference current value having a reactive current component when the measured direct voltage has alternating voltage components above a determined level for one or more determined frequencies.

20. A method for providing electric power to a vehicle (1) from an AC-supply line (2) through a pantograph (3) of the vehicle in contact with the supply line when the vehicle is moving therealong, said method being carried out by using an arrangement comprising, connected in series with the pantograph in a path of electric power flow between the supply line and equipment on board of the vehicle, a transformer (5) and a converter (8) adapted to convert alternating voltage into direct voltage and conversely, said series connection delivering a voltage used directly or indirectly for driving said equipment on board of the vehicle, in which current valves ot the converter are controlled to generate voltage pulses on the alternating voltage side thereof according to a Pulse Width Modulation pattern in accordance with power and current reference values determined on the basis of power orders received from one or more control members, ***characterized* in that** a reference current value having a reactive current component is used, at least when there is risk of formation of ice on the supply line and said power orders received correspond to a substantially lower power delivered to said equipment than the maximum power that may be delivered from the arrangement thereto, for controlling the converter to cause a reactive current to flow between the supply line and the vehicle.

21. A method according to claim 20, ***characterized* in that** the temperature outside the vehicle is measured and temperature values so obtained are compared with a temperature threshold value and when a measured temperature value is above said temperature threshold value a reference current value without said reactive current component is used for the control of the converter (8).

22. A method according to claim 20 or 21, ***characterized* in that** a reference current value having a reactive current component for the control of the converter (8) is used under the condition that said power orders received correspond to a substantially lower power delivered to said equipment than the maximum power that may be delivered thereto.

23. A method according to claim 22, ***characterized* in that** a reference current value is used, which has a reactive current component with a magnitude increasing the difference of the voltage on the supply line and the voltage on the alternating voltage side of the converter, related to a primary side of the transformer, at zero crossing of the alternating current from the supply line to the vehicle substantially with respect to an absence of this reactive current component.

24. A computer program directly loadable into the internal memory of a computer, comprising software for controlling the steps of any of claims 20-23 when said program is run on the computer.

25. A computer program according to claim 24, provided at least partially through a network as the Internet.

26. A computer readable medium, having a program recorded thereon, where the program is to make a computer control the steps of any of the claims 20-23.

## Patentansprüche

1. Anordnung zum Bereitstellen von elektrischer Leistung an ein Fahrzeug (1) von einer AC-Versorgungsleitung (2) durch einen Stromabnehmer (3) des Fahrzeugs in Kontakt mit der Versorgungsleitung, wenn sich das Fahrzeug an dieser entlang bewegt, wobei die Anordnung in einer seriellen Verbindung mit dem Stromabnehmer in einem elektrischen Leistungsflusspfad zwischen der Versorgungsleitung und einer Ausrüstung an Bord des Fahrzeugs einen Transformator (5) und einen Wandler (8), der zum Umsetzen von Wechselspannung in Gleichspannung und umgekehrt ausgelegt ist, wobei die serielle Verbindung eine Spannung liefert, die direkt oder indirekt verwendet wird, um die Ausrüstung an Bord des Fahrzeugs zu betreiben, und eine Steuerungseinheit (18) umfasst, die zum Steuern von Stromventilen (10, 11) des Wandlers ausgelegt ist, um Spannungsimpulse an der Wechselspannungsseite desselben gemäß einem Impulsbreitenmodulationsmuster in Übereinstimmung mit Leistungs- und Stromreferenzwerten zu erzeugen, welche auf der Grundlage von Leistungsbefehlen bestimmt werden, die von einem oder mehreren Steuerungselementen empfangen werden,
**dadurch gekennzeichnet, dass**
die Steuerungseinheit ausgelegt ist, um einen Referenzstromwert mit einer Blindstromkomponente zumindest dann zu verwenden, wenn ein Risiko zur Eisbildung an der Versorgungsleitung besteht und die empfangenen Leistungsbefehle einer wesentlich niedrigeren an die Ausrüstung gelieferten Leistung als der maximalen Leistung entsprechen, die von der Anordnung dorthin geliefert werden kann, um den Wandler so zu steuern, dass das Fließen eines Blindstroms zwischen der Versorgungsleitung und dem Fahrzeug bewirkt wird.

2. Anordnung nach Anspruch 1,
**dadurch gekennzeichnet, dass**
sie ferner Mittel (24), die zum Messen der Temperatur außerhalb des Fahrzeugs ausgelegt sind, und ein Mittel (25) umfasst, das ausgelegt ist, um Temperaturwerte, die so beschafft werden, mit einem Temperaturschwellenwert zu vergleichen und ein Signal an die Steuerungseinheit zu senden, wenn ein gemessener Temperaturwert über dem Temperaturschwellenwert liegt, um einen Referenzstromwert ohne die Blindstromkomponente zum Steuern des Wandlers zu verwenden.

3. Anordnung nach Anspruch 2,
**dadurch gekennzeichnet, dass**
das Vergleichsmittel (25) so ausgelegt ist, dass es als den Temperaturschwellenwert eine Temperatur zwischen +2°C und +7°C, vorzugsweise zwischen +4°C und +6°C, aufweist.

4. Anordnung nach einem oder mehreren der vorstehenden Ansprüche,
**dadurch gekennzeichnet, dass**
die Steuerungseinheit (18) ausgelegt ist, um einen Referenzstromwert mit einer Blindstromkomponente für die Steuerung des Wandlers (8) unter der Bedingung zu verwenden, dass die empfangenen Leistungsbefehle einer wesentlich niedrigeren an die Ausrüstung gelieferten Leistung als der maximalen Leistung entsprechen, die von der Anordnung dorthin geliefert werden kann.

5. Anordnung nach Anspruch 4,
**dadurch gekennzeichnet, dass**
die Bedingung einer niedrigen für die Steuerung des Wandlers befohlenen Leistung bedeutet, dass die befohlene Leistung niedriger als 0,5-mal, vorteilhafter 0,3-mal und bevorzugt 0,2-mal die maximale Leistung sein soll.

6. Anordnung nach Anspruch 4 oder 5,
**dadurch gekennzeichnet, dass**
die Steuerungseinheit (18) ausgelegt ist, um einen Referenzstromwert mit einer Blindstromkomponente mit einer Größe zu verwenden, welche die Differenz der Spannung an der Versorgungsleitung und der Spannung an der Wechselstromseite des Wandlers mit Bezug auf eine Primärseite des Transformators bei einem Nulldurchgang des Wechselstroms von der Versorgungsleitung an das Fahrzeug mit Bezug auf ein Nichtvorhandensein dieser Blindstromkomponente wesentlich erhöht.

7. Anordnung nach Anspruch 6,
**dadurch gekennzeichnet, dass**
die Steuerungseinheit (18) zur Verwendung der Blindstromkomponente mit einer Größe ausgelegt ist, die dazu führt, dass die Spannungsdifferenz bei dem Nulldurchgang 1 kV überschreitet.

8. Anordnung nach Anspruch 6 oder 7,
**dadurch gekennzeichnet, dass**
die Steuerungseinheit (18) zur Verwendung der Blindstromkomponente mit einer Größe ausgelegt ist, die zu einem Ansteigen der Spannungsdifferenz um einen Faktor von mindestens 1,5, vorteilhaft von mindestens 2 und bevorzugt von mindestens 3 führt.

9. Anordnung nach Anspruch 4 oder 5,
**dadurch gekennzeichnet, dass**
die Steuerungseinheit (18) zur Verwendung eines Referenzstromwerts mit einer Blindstromkomponente ausgelegt ist, die höher als eine Wirkstromkomponente des Referenzstromwerts für den niedrigsten möglichen Leistungsbefehl ist, der von der Steuerungseinheit empfangen werden kann.

10. Anordnung nach Anspruch 4 und möglicherweise nach einem oder mehreren der anderen vorstehenden Ansprüche,
**dadurch gekennzeichnet, dass**
die Steuerungseinheit (18) ausgelegt ist, um einen Referenzstromwert mit einer Blindstromkomponente einer Größe zu verwenden, die zu einer derartigen Differenz zwischen der Spannung der Versorgungsleitung und derjenigen an der Wechselspannungsseite des Wandlers mit Bezug auf eine Primärseite des Transformators für den niedrigsten möglichen Leistungsbefehl führt, der von der Steuerungseinheit empfangen werden kann, dass cosϕ niedriger als 0,9, vorzugsweise niedriger als 0,85 ist, wobei ϕ der Winkel zwischen dem Strom von der Versorgungsleitung an das Fahrzeug und der Spannung an der Versorgungsleitung ist.

11. Anordnung einem oder mehreren der vorstehenden Ansprüche,
**dadurch gekennzeichnet, dass**
die Steuerungseinheit (18) zur Verwendung eines Referenzstromwerts mit einer Blindstromkomponente ausgelegt ist, die mit einer Zunahme der befohlenen Leistung abnimmt.

12. Anordnung nach einem oder mehreren der vorstehenden Ansprüche,
**dadurch gekennzeichnet, dass**
die Steuerungseinheit (18) zur Verwendung eines Referenzstromwerts mit einer Blindstromkomponente ausgelegt ist, die für Leistungsbefehle unter einem gewissen Wert konstant ist.

13. Anordnung nach Anspruch 12,
**dadurch gekennzeichnet, dass**
die Steuerungseinheit (18) zur Verwendung eines Referenzstromwerts mit einer Blindstromkomponente ausgelegt ist, die von dem gewissen Wert ab mit einer zunehmenden befohlenen Leistung kontinuierlich abnimmt.

14. Anordnung nach einem oder mehreren der vorstehenden Ansprüche,
**dadurch gekennzeichnet, dass**
sie ein Mittel (23) umfasst, das zum Messen der Spannung an der Versorgungsleitung (2) ausgelegt ist, und dass die Steuerungseinheit (18) zur Verwendung eines Referenzstromwerts mit einer Blindstromkomponente ausgelegt ist, wenn Sprünge der so gemessenen Spannung detektiert werden.

15. Anordnung nach Anspruch 2 und möglicherweise nach einem oder mehreren der anderen vorstehenden Ansprüche,
**dadurch gekennzeichnet, dass**
die Steuerungseinheit (18) ausgelegt ist, um einen Referenzstromwert mit einer Blindstromkomponente eine vorbestimmte Zeitspanne lang, zum Beispiel mindestens 0,5 Stunden lang und vorzugsweise mindestens 1,5 Stunden lang zu verwenden, beginnend mit einer Detektion, dass eine Bedingung für eine derartige Steuerung des Wandlers erfüllt ist.

16. Anordnung nach einem oder mehreren der vorstehenden Ansprüche,
**dadurch gekennzeichnet, dass**
sie zum Anordnen in jedem einzelnen Fahrzeug (1) ausgelegt ist, wenn eine Vielzahl derartiger Fahrzeuge in einem Zug direkt oder indirekt miteinander verbunden sind, und dass sie unabhängig von derartigen Anordnungen in dem oder den anderen Fahrzeugen in dem Zug arbeitet.

17. Anordnung nach einem oder mehreren der vorstehenden Ansprüche,
**dadurch gekennzeichnet, dass**
sie mehr als den einen Wandler (8) in dem Fahrzeug umfasst, und dass die Steuerungseinheit (18) zur Verwendung eines Referenzstromwerts mit einer Blindstromkomponente ausgelegt ist, die von den Wandlern gleichmäßig gemeinsam verwendet wird.

18. Anordnung nach einem oder mehreren der vorstehenden Ansprüche,
**dadurch gekennzeichnet, dass**
der Transformator (5) eine mit dem Stromabnehmer verbundene Primärwicklung aufweist und der Wandler (8) eine Wechselspannungsseite desselben aufweist, die mit einer Sekundärwicklung (7) des Transformators verbunden ist, und ausgelegt ist, um die Wechselspannung der Sekundärwicklung in eine Gleichspannung an einer Gleichspannungsseite des Wandlers umzusetzen.

19. Anordnung nach Anspruch 18,
**dadurch gekennzeichnet, dass**
sie ein Mittel (26) umfasst, das zum Messen der Gleichspannung an der Gleichspannungsseite des Wandlers (8) und zum Liefern von Informationen darüber an die Steuerungseinheit (18) ausgelegt ist, und dass die Steuerungseinheit zur Verwendung eines Referenzstromwerts mit einer Blindstromkomponente ausgelegt ist, wenn die gemessene Gleichspannung Wechselspannungskomponenten bei einer oder mehreren bestimmten Frequenzen über einem bestimmten Niveau aufweist.

20. Verfahren zum Bereitstellen von elektrischer Leistung an ein Fahrzeug (1) von einer AC-Versorgungsleitung (2) durch einen Stromabnehmer (3) des Fahrzeugs in Kontakt mit der Versorgungsleitung, wenn sich das Fahrzeug an dieser entlang bewegt, wobei das Verfahren ausgeführt wird, indem eine Anordnung verwendet wird, die in einer seriellen Verbindung mit dem Stromabnehmer in einem elektrischen Leistungsflusspfad zwischen der Versorgungsleitung und einer Ausrüstung an Bord des Fahrzeugs einen Transformator (5) und einen Wandler (8) umfasst, der zum Umsetzen von Wechselspannung in Gleichspannung und umgekehrt ausgelegt ist, wobei die serielle Verbindung eine Spannung liefert, die direkt oder indirekt zum Betreiben der Ausrüstung an Bord des Fahrzeugs verwendet wird, in welcher Stromventile des Wandlers gesteuert werden, um Spannungsimpulse an der Wechselspannungsseite desselben gemäß einem Impulsbreitenmodulationsmuster in Übereinstimmung mit Leistungs- und Stromreferenzwerten zu erzeugen, welche auf der Grundlage von Leistungsbefehlen bestimmt werden, die von einem oder mehreren Steuerungselementen empfangen werden,
**dadurch gekennzeichnet, dass**
ein Referenzstromwert mit einer Blindstromkomponente zumindest dann verwendet wird, wenn ein Risiko zur Eisbildung an der Versorgungsleitung besteht und die empfangenen Leistungsbefehle einer wesentlich niedrigeren an die Ausrüstung gelieferten Leistung als der maximalen Leistung entsprechen, die von der Anordnung dorthin geliefert werden kann, um den Wandler so zu steuern, dass das Fließen eines Blindstroms zwischen der Versorgungsleitung und dem Fahrzeug bewirkt wird.

21. Verfahren nach Anspruch 20,
**dadurch gekennzeichnet, dass**
die Temperatur außerhalb des Fahrzeugs gemessen wird und so beschaffte Temperaturwerte mit einem Temperaturschwellenwert verglichen werden, und ein Referenzstromwert ohne die Blindstromkomponente für die Steuerung des Wandlers (8) verwendet wird, wenn ein gemessener Temperaturwert über dem Temperaturschwellenwert liegt.

22. Verfahren nach Anspruch 20 oder 21,
**dadurch gekennzeichnet, dass**
ein Referenzstromwert mit einer Blindstromkomponente für die Steuerung des Wandlers (8) unter der Bedingung verwendet wird, dass die empfangenen Leistungsbefehle einer wesentlich niedrigeren an die Ausrüstung gelieferten Leistung als der maximalen Leistung entsprechen, die dahin geliefert werden kann.

23. Verfahren nach Anspruch 22,
**dadurch gekennzeichnet, dass**
ein Referenzstromwert verwendet wird, der eine Blindstromkomponente mit einer Größe aufweist, welche die Differenz der Spannung an der Versorgungsleitung und der Spannung an der Wechselstromseite des Wandlers mit Bezug auf eine Primärseite des Transformators bei einem Nulldurchgang des Wechselstroms von der Versorgungsleitung an das Fahrzeug mit Bezug auf ein Fehlen dieser Blindstromkomponente wesentlich erhöht.

24. Computerprogramm, das in den internen Speicher eines Computers direkt geladen werden kann, das Software zum Steuern der Schritte eines oder mehrerer der Ansprüche 20 - 23 umfasst, wenn das Programm auf dem Computer läuft.

25. Computerprogramm nach Anspruch 24,
das zumindest teilweise durch ein Netzwerk wie das Internet bereitgestellt wird.

26. Computerlesbares Medium mit einem darauf aufgezeichneten Programm, wobei das Programm einen Computer zur Ausführung einer Steuerung der Schritte von einem oder mehreren der Ansprüche 20 - 23 veranlasst.

## Revendications

1. Arrangement pour alimenter un véhicule (1) en courant électrique à partir d'une ligne d'alimentation en courant alternatif (2) via un pantographe (3) du véhicule en contact avec la ligne d'alimentation quand le véhicule est en mouvement le long de celle-ci, le dit arrangement comprenant, connectés en série avec le pantographe dans un circuit de circulation de courant électrique entre la ligne d'alimentation et l'équipement embarqué à bold du véhicule, un transformateur (5) et un convertisseur (8) adaptés à convertir le courant alternatif en courant continu et inversement, la dite connexion en série fournissant un courant utilisé directement ou indirectement pour faire fonctionner le dit équipement embarqué à bord du véhicule, et une unité de contrôle (18) adaptée à contrôler les valves de courant (10, 11) du dit convertisseur pour générer des impulsions de tension du côté courant alternatif de celui-ci selon un modèle de modulation de largeur de pulsation en accord avec les valeurs de référence de courant et de tension déterminées sur la base des demandes de courant reçues d'un ou plusieurs éléments de contrôle, **caractérisé en ce que** l'unité de contrôle est adaptée pour utiliser une valeur de référence de courant ayant une composante réactive de courant, au moins quand il y a un risque de formation de glace sur la ligne d'alimentation et que les dites demandes de courant reçues correspondent à un courant fourni au dit équipement notablement plus faible que le courant maximal qui peut être délivré à partir du dit arrangement, pour contrôler le convertisseur qui provoque la circulation d'un courant réactif entre la ligne d'alimentation et le véhicule.

2. Arrangement selon la revendication 1, **caractérisé en ce qu'**il comprend de plus un moyen (24) adapté à mesurer la température à l'extérieur du véhicule et un moyen (25) adapté pour comparer les valeurs de température ainsi obtenues avec une valeur seuil de la température et, quand une valeur mesurée de la température est supérieure à la dite valeur seuil de la température, à envoyer un signal à l'unité de contrôle pour utiliser une valeur de courant de référence sans la dite composante réactive du courant pour le contrôle du convertisseur.

3. Arrangement selon la revendication 2, **caractérisé en ce que** le dit moyen de comparaison (25) est adapté à avoir comme valeur seuil de la température, une température comprise entre +2°C et +7°C, de préférence entre +4°C et +6°C.

4. Arrangement selon l'une quelconque des revendications précédentes, **caractérisé en ce que** l'unité de contrôle (18) est adaptée pour utiliser une valeur de courant de référence ayant une composante réactive du courant pour le contrôle du convertisseur (8) à la condition que les dites demandes de courant reçues correspondent à un courant délivré au dit équipement substantiellement plus faible que le courant maximal qui peut être délivré au dit arrangement.

5. Arrangement selon la revendication 4, **caractérisé en ce que** la dite condition d'un courant faible demandé pour le contrôle du convertisseur signifie que le courant demandé doit être inférieur à 0,5, avantageusement à 0,3 et de préférence à 0,2 fois le dit courant maximal.

6. Arrangement selon la revendication 4 ou 5, **caractérisé en ce que** l'unité de contrôle (18) est adaptée pour utiliser une valeur de courant de référence ayant une composante réactive du courant avec une amplitude augmentant la différence entre la tension sur la ligne d'alimentation et la tension du courant alternatif côté convertisseur, relatif à la partie primaire du transformateur, au niveau du croisement à zéro du courant alternatif de la ligne d'alimentation vers le véhicule essentiellement par rapport à une absence de cette composante réactive du courant.

7. Arrangement selon la revendication 6, **caractérisé en ce que** l'unité de contrôle (18) est adaptée pour utiliser une dite composante réactive du courant avec une amplitude résultant en une dite différence de tension dépassant 1 kV au dit croisement à zéro.

8. Arrangement selon la revendication 6 ou 7, **caractérisé en ce que** l'unité de contrôle (18) est adaptée pour utiliser la dite composante réactive du courant avec une amplitude résultant en une augmentation de la dite différence de tension d'un facteur d'au moins 1,5, avantageusement d'au moins 2 et de préférence d'au moins 3.

9. Arrangement selon la revendication 4 ou 5, **caractérisé en ce que** l'unité de contrôle (18) est adaptée pour utiliser une valeur de courant de référence ayant une composante réactive de courant qui est supérieure à une composante active du courant de la dite valeur de courant de référence pour la demande de courant la plus faible possible qui peut être reçue par l'unité de contrôle.

10. Arrangement selon la revendication 4 et éventuellement l'une quelconque des autres revendications précédentes, **caractérisé en ce que** l'unité de contrôle (18) est adaptée pour utiliser une valeur de courant de référence ayant une composante réactive du courant d'une amplitude résultant en une telle différence entre la tension de la ligne d'alimentation et celle du courant alternatif côté convertisseur, relatif à une partie primaire du transformateur, pour la demande de courant la plus basse possible qui peut être reçue par l'unité de contrôle que cos ϕ est inférieur à 0,9, de préférence inférieur à 0,85, ϕ étant l'angle entre le courant de la ligne d'alimentation du véhicule et la tension sur la ligne d'alimentation.

11. Arrangement selon l'une quelconque des revendications précédentes, **caractérisé en ce que** l'unité de contrôle (18) est adaptée pour utiliser une valeur de courant de référence ayant une composante réactive du courant diminuant avec une augmentation de la dite puissance demandée.

12. Arrangement selon l'une quelconque des revendications précédentes, **caractérisé en ce que** la dite unité de contrôle (18) est adaptée pour utiliser une valeur de courant de référence ayant une composante réactive du courant étant constante pour les demandes de courant inférieures à une certaine valeur.

13. Arrangement selon la revendication 12, **caractérisé en ce que** l'unité de contrôle (18) est adaptée à utiliser une valeur de courant de référence ayant une composante réactive de courant diminuant en continu avec l'augmentation en courant demandé à partir d'une certaine dite valeur.

14. Arrangement selon l'une quelconque des revendications précédentes, **caractérisé en ce qu'**il comprend un moyen (23) adapté pour mesurer la tension sur la dite ligne d'alimentation (2), et **en ce que** l'unité de contrôle (18) est adaptée pour utiliser une valeur de courant de référence ayant une composante réactive de courant quand des sauts de la tension ainsi mesurés sont détectés.

15. Arrangement selon la revendication 2 et possiblement l'une quelconque des autres revendications précédentes, **caractérisé en ce que** l'unité de contrôle (18) est adaptée pour utiliser une valeur de courant de référence ayant une composante réactive du courant pour une période de temps prédéterminée, par exemple au moins pendant 0,5 heure et de préférence pendant au moins 1,5 heures, à partir de la détection qu'une condition pour un tel contrôle du convertisseur est satisfaite.

16. Arrangement selon l'une quelconque des revendications précédentes, **caractérisé en ce qu'**il est adapté à être disposé dans chaque véhicule individuel (1) quand une pluralité de ces véhicules sont directement ou indirectement connectés les uns aux autres en un train et à fonctionner indépendamment de tels arrangements dans le ou les autres véhicules du train.

17. Arrangement selon l'une quelconque des revendications précédentes, **caractérisé en ce qu'**il comprend plus d'un dit convertisseur (8) dans le dit véhicule, et **en ce que** l'unité de contrôle (18) est adaptée pour utiliser une valeur de courant de référence ayant une composante réactive du courant partagée également par les convertisseurs.

18. Arrangement selon l'une quelconque des revendications précédentes, **caractérisé en ce que** le dit transformateur (5) comporte un bobinage primaire connecté au dit pantographe et que le convertisseur (8) possède une partie de tension alternative connectée à un bobinage secondaire (7) du transformateur et est adaptée pour convertir le courant alternatif du dit bobinage secondaire en courant continu au niveau de la partie courant continu du convertisseur.

19. Arrangement selon la revendication 18, **caractérisé en ce qu'**il comprend un moyen (26) adapté pour mesurer la tension continue du côté tension continue du convertisseur (8) et pour délivrer l'information y relative à l'unité de contrôle (18), et **en ce que** l'unité de contrôle est adaptée pour utiliser une valeur de courant de référence ayant une composante réactive de courant quand la tension continue mesurée comporte des composantes de tension alternative supérieures à un niveau déterminé pour une ou plusieurs fréquences déterminées.

20. Méthode pour fournir du courant électrique à un véhicule (1) à partir d'une ligne d'alimentation en courant alternatif (2) par l'intermédiaire d'un pantographe (3) du véhicule en contact avec la ligne d'alimentation quand le véhicule est en déplacement le long de celle-ci, la dite méthode étant mise en oeuvre par l'utilisation d'un arrangement comprenant, connectés en série avec le pantographe dans un circuit de circulation de courant électrique entre la ligne d'alimentation et l'équipement à bord du véhicule, un transformateur (5) et un convertisseur (8) adaptés pour convertir du courant alternatif en courant continu et inversement, la dite connexion en série délivrant une tension utilisée directement ou indirectement pour faire fonctionner le dit équipement embarqué à bord du véhicule, dans lequel les valves de courant du convertisseur sont contrôlées pour générer des impulsions de tension du côté tension alternative de celui-ci selon un modèle de Modulation de la Largeur d'Impulsion en accord avec les valeurs de référence de courant et de tension déterminées sur la base des demandes de courant reçues d'un ou de plusieurs éléments de contrôle, **caractérisée en ce qu'**on utilise une valeur de référence du courant ayant une composante de courant réactif, au moins quand il y a un risque de formation de glace sur la ligne d'alimentation et que les dites demandes de courant reçues correspondent à une puissance notablement plus faible fournie au dit équipement que le courant maximal qui peut être délivré à partir de l'arrangement à celui-ci, pour contrôler le convertisseur qui provoque la circulation d'un courant réactif entre la ligne d'alimentation et le véhicule.

21. Méthode selon la revendication 20, **caractérisée en ce que** la température à l'extérieur du véhicule est mesurée et **en ce que** les valeurs de température ainsi obtenues sont comparées avec une valeur seuil de la température et **en ce que** quand une valeur de température mesurée est au-dessus de la dite valeur seuil de la température, on utilise une valeur de courant de référence sans la dite composante réactive du courant pour le contrôle du convertisseur.

22. Méthode selon la revendication 20 ou 21, **caractérisée en ce qu'**on utilise une valeur de référence du courant ayant une composante réactive du courant pour le contrôle du convertisseur (8) à la condition que les dites demandes de courant reçues correspondent à un courant délivré au dit équipement notablement inférieur au courant maximal qui peut y être délivré.

23. Méthode selon la revendication 22, **caractérisée en ce qu'**on utilise une valeur de référence du courant, qui a une composante réactive de courant avec une amplitude augmentant la différence de tension de la ligne d'alimentation et la tension du côté tension alternative du convertisseur, en relation avec une partie primaire du transformateur, au croisement à zéro du courant alternatif provenant de la ligne d'alimentation vers le véhicule essentiellement par rapport à une absence à cette composante réactive du courant.

24. Programme informatique chargeable directement dans la mémoire interne d'un ordinateur, comprenant un logiciel pour contrôler les étapes de l'une quelconque des revendications 20 à 23 quand le dit programme tourne sur l'ordinateur.

25. Programme informatique selon la revendication 24, fourni au moins partiellement par un réseau tel que l'internet.

26. Support lisible par un ordinateur, ayant un programme enregistré, où le programme est destiné à réaliser un contrôle informatique des étapes de l'une quelconque des revendications 20 à 23.
